Europäisches Patentamt

European Patent Office

Office européen des brevets

(11) Veröffentlichungsnummer: **0 393 212**

**A1**

(12) **EUROPÄISCHE PATENTANMELDUNG**

(21) Anmeldenummer: **89106837.1**

(22) Anmeldetag: **17.04.89**

(51) Int. Cl.⁵: **C05F 17/02**

(43) Veröffentlichungstag der Anmeldung:
**24.10.90 Patentblatt 90/43**

(84) Benannte Vertragsstaaten:
**AT BE CH DE ES FR GB GR IT LI LU NL SE**

(71) Anmelder: **Reuss, Rita**
**Schlesienstrasse 10**
**D-8602 Memmelsdorf(DE)**

(72) Erfinder: **Reuss, Rita**
**Schlesienstrasse 10**
**D-8602 Memmelsdorf(DE)**

(74) Vertreter: **Göbel, Matthias, Dipl.-Ing.**
**Pruppacher Hauptstrasse 5-7**
**D-8501 Pyrbaum-Pruppach(DE)**

(54) **Vorrichtung zum Herstellen von Humus.**

(57) Bei einer Vorrichtung zum Herstellen von Humus aus verrottbaren Materialien mit einem eine obere Einfüllöffnung aufweisenden schachtartigen Aufnahmebehälter für die Materialien, bei der der Aufnahmebehälter durch einen Bodenteil und auf diesem und übereinander aufstellbaren Ringkörpern und einem die Einfüllöffnung des Aufnahmebehälters übergreifenden Deckelteil gebildet ist, ist zur Anpassung des Aufnahmebehälters an verschieden großen Materialmengen und zu einer schnellen Humusherstellung vorgesehen, daß der Bodenteil (1) mindestens eine, sich über eine Teiltiefe des Bodenteils von der Vorderseite in Richtung Rückseite erstreckende, vorne offene Aussparung (9 bzw. 10) für die Aufnahme einer Schublade (11) und dahinter eine sich quer zur Aussparung erstreckende, in einer Seitenwand offene Aussparung (13) für die Aufnahme eines Heizelements (14) aufweist und daß der Bodenteil (1) innen oberhalb der Aussparung (9 bzw. 10, 13) eine von oben her in den Bodenteil (1) einhängbare Wanne (16) trägt, die die das Heizelement (14) aufnehmende Aussparung (13) dicht und vermittels Führungen (17) nach vorne ausziehbarem gelochten Plattenteil (18) die die Schublade aufnehmende Aussparung (9 bzw. 10) freigebbar übergreift.

Fig. 1

Xerox Copy Centre

# Vorrichtung zum Herstellen von Humus

Die Erfindung betrifft eine Vorrichtung zum Herstellen von Humus aus verrottbaren Materialien, mit einem eine obere Einfüllöffnung aufweisenden schachtartigen Aufnahmebehälter für die Materialien, bei der der Aufnahmebehälter durch einen Bodenteil und auf diesen übereinander aufstellbaren Ringkörpern und einem die Einfüllöffnung des Aufnahmebehälters übergreifenden Deckelteil gebildet ist.

Bei einer bekannten Vorrichtung (DE-OS 34 31 049) dieser Art dient als Humusbereiter ein einstückiger schachtförmiger Behälter, der verrottbare Materialien von oben her aufnimmt. Die Umsetzung der Materialien zu Humus ist bei dieser Vorrichtung durch die Anordnung von gelochten Rohren im Aufnahmebehälter, über die eine Luftzuführung erfolgt, verbessert. Abgesehen davon, daß der Aufnahmebehälter keine Anpassung an veränderte Materialmengen ermöglicht, trägt die Luftzuführung zu einer schnellen Umsetzung der Materialien zu Humus nur beschränkt bei. Bei einer anderen Vorrichtung (DE-GM 8 530 923) ist durch die Anordnung von auf einem Bodenteil übereinander aufstellbaren Zellen eine Volumenänderung des so gebildeten Rottebehälters zur Anpassung an verschieden große Materialmengen zwar möglich, jedoch bedarf bei dieser Vorrichtung die Umsetzung der Materialien zu Humus eines großen Zeitaufwands.

Es ist Aufgabe der Erfindung eine Vorrichtung zum Herstellen von Humus zu schaffen, deren Aufnahmebehälter an verschieden großen Materialmengen anpaßbar ist und die eine schnelle Humusbereitung ermöglicht.

Zur Lösung dieser Aufgabe wird der Erfindung gemäß vorgeschlagen, daß der Bodenteil des Aufnahmebehälters mindestens eine sich über eine Teiltiefe des Bodenteils von der Vorderseite in Richtung Rückseite erstreckende, vorne offene Aussparung für die Aufnahme einer Schublade und dahinter eine sich quer zu dieser Aussparung erstreckende, in einer Seitenwand offene Aussparung für die Aufnahme eines Heizelements aufweist und daß der Bodenteil innen oberhalb der Aussparungen eine von oben her in den Bodenteil einhängbare Wanne trägt, die das Heizelement aufnehmende Aussparung dicht und vermittels eines in Führungen nach vorne ausziehbaren gelochten Plattenteils die die Schublade aufnehmende Aussparung freigebbar übergreift. Nach bevorzugter Ausführung ist vorgesehen, den Bodenteil nebeneinander mit zwei sich über eine Teiltiefe des Bodenteils in Richtung Rückseite erstreckende, vorne offene Aussparungen für die Aufnahme von Schubladen zu versehen und die beiden Aussparungen durch in Führungen der Wanne verschieblich geführten gelochten Plattenteilen zu übergreifen. Zweckmäßig sind der Bodenteil und der Deckel sowie der Einsatzkörper und die Ringkörper und die Schubladen aus aufgeschäumtem Kunststoff gebildet. Vermittels der Wanne ist eine sichere Trennung der verrottbaren Materialien mit dem im Bodenteil befindlichen Schubladen und dem Heizelement erzielbar, wodurch einerseits die Schubladen behinderungsfrei beweglich im Bodenteil bleiben und das Heizelement im Abstand der verrottbaren Materialien untergebracht und austauschbar gehalten ist, während die gelochten Plattenteile eine Verbindung zwischen dem Innenraum des Aufnahmebehälters und den Schubladen etwa zur Lüftung und Entleerung sowie zum Abfluß von Rottewasser und zum Übertritt einer Startbeschickung mit Regenwürmern aus den Schubladen in den Aufnahmebehälter ermöglichen. Die Regenwürmer können über die Lochungen der Plattenteile selbsttätig in die verrottbaren Materialien gelangen. Außerdem sichert die Verwendung von aufgeschäumtem Kunststoff für die Herstellung von Bodenteil und Deckel, Einsatzkörper, Ringkörper sowie Schubladen die verrottbaren Materialien gegen schädigende Austrocknung bzw. Hitze oder Kälte, wodurch unabhängig von Außentemperaturen eine Humusherstellung zu jeder Jahreszeit durchführbar ist. Ausserdem schützt die Verwendung der isolierenden Kunststoffe den Wurmbesatz gegen Vernichtung durch Witterungseinflüssen. Zur Verhinderung von Wärmeverlusten ist außerdem noch vorgesehen, die Einbringöffnung für die das Heizelement aufnehmende Aussparung durch einen in die Einbringöffnung einschiebbaren Einsatzkörper verschließbar zu machen und zur Fernhaltung der Bodenkälte von den verrottbaren Materialien ist der Bodenteil vermittels an seiner Unterseite angeordneten Stützfüßen im Abstand des Erdbodens standsicher zu halten.

In Ausgestaltung der Vorrichtung ist vorgesehen, daß die Wanne mit einem nach außen ausgestellten Kragen auf einer am Bodenteil ausgebildeten Absetzung abstützbar und in der Stützstellung durch an dem dem Bodenteil benachbarten Ringkörper angeformte Ansätze fixierbar ist. Die Wanne kann zweckmäßig aus einem Kunststoff größerer Festigkeit, z.B. Polystyrol ausgeformt oder anderweitig, z.B. durch Tiefziehen hergestellt sein, während die Plattenteile beliebig, aus einem Kunststoff oder einem metallischen Werkstoff hergestellt sein können. Zweckmäßig sind die Plattenteile in der Länge so bemessen, daß sie bei in die Aussparungen eingeschobenen Schubladen diese nach außen überragen und bei eingeschobenen Schubladen erfaßbar sind.

Es entspricht dem Erfindungsgedanken, daß die Schubladen beliebig ausgeführt sein können. Bevorzugt sind die Schubladen jedoch durch eine ebene aufrechte Vorderwand mit in Schieberichtung zu beiden Seiten sich erstreckenden Seitenwänden und einem schräg nach hinten oben erstreckenden Boden gebildet. Die Anordnung eines schrägen Bodens ergibt den Vorteil, daß bei einer Aufnahme von Humusmaterial, dieses in Richtung auf das vordere Ende der Schublade selbsttätig vorbewegbar ist.

In weiterer Ausgestaltung der Vorrichtung ist vorgesehen, daß der Boden- und Deckelteil sowie die Ringkörper in den einander benachbarten Trennungsflächen korrespondierende Nuten und Federn aufweisen, die den Boden- und Deckelteil sowie die Ringkörper in der aufrechten Längsachse ausrichten und zueinander fixieren. Es besteht außerdem die Möglichkeit, den Boden- und Deckelteil sowie die Ringkörper in den einander zugeordneten Trennungsflächen mit miteinander korrespondierenden Falzen zu versehen, die ebenfalls der Ausrichtung und der Fixierung dienen. Die Nuten und Federn bzw. Falze sind dabei über Teillängen der gemeinsamen Trennungsflächen oder umlaufend ausgebildet.

Zu zusätzlichen Lüftungsmaßnahmen der verrottbaren Materialien ist noch vorgesehen, in den gemeinsamen Trennungsflächen von Bodenteil und Ringkörpern sowie Ringkörpern und Deckelteil abschnittsweise Abstandsstücke anzuordnen und zwischen den Abstandsstücken als Zuluftöffnungen dienende Bereiche zu bilden. Die Abstandsstücke sind dabei bevorzugt in den Eckbereichen der gemeinsamen Trennungsflächen von Bodenteil und Ringkörpern sowie den Ringkörpern einstellbar. Zur Kontrolle der Verrottungstemperatur können der Bodenteil und/oder die Ringkörper in ihren Umfangsflächen Durchführungsöffnungen für Temperaturmeßeinrichtungen aufweisen.

Ferner ist vorgesehen, den Deckelteil im Bereich einer Öffnung mit einem eine Schneid- und/oder Schlageinrichtung aufweisenden Häcksler für die einzufüllenden, verrottbaren Materialien auszurüsten. Die Materialien erhalten durch die Zerkleinerung eine Aufbereitung, die sich auf die Bakterientätigkeit im Aufnahmebehälter günstig auswirkt. Schließlich ist zum leichten Transport der Vorrichtung noch vorgesehen, im Bodenteil insbesondere zwischen den Stützfüßen Einhängeöffnungen für Tragegriffe auszubilden bzw. Griffmulden einzuformen.

Darüber hinaus hat sich als vorteilhaft erwiesen, wenn der Bodenteil und/oder der Deckelteil und/oder die Ringkörper innen mit einem Folienwerkstoff, z.B. einer Aluminium-Folie kaschiert sind. Die Folie kann als Wärmefolie wirken und den Wärmehaushalt der Vorrichtung stabilisieren. Außerdem schützt die Folie die Wandungen des Aufnahmebehälters vor mechanischen und chemischen Einflüssen. Eine weiterhin am Bodenteil, den Ringkörpern und dem Deckelteil außen aufgebrachte Wetterschutzauflage ermöglicht die Vorrichtung im Freien aufzustellen.

Es versteht sich, daß die Vorrichtung nicht auf eine vorbestimmte Größe des Aufnahmebehälters beschränkt ist. Auch sind verschiedene Querschnittsformen für Bodenteil und Ringkörper bzw. Deckel denkbar. So sind eckige bzw. runde Querschnittsformen in Anwendung bringbar.

Die Erfindung ist anhand eines Ausführungsbeispiels in der Zeichnung verdeutlicht. Hierin bedeuten:

Fig. 1 eine Vorrichtung in Vorderansicht,

Fig. 2 eine abgewandelter Vorrichtung in Vorderansicht,

Fig. 3 einen Bodenteil mit Wanne in Draufsicht,

Fig. 4 eine Wanne in Draufsicht,

Fig. 5 einen Ringkörper in Unteransicht,

Fig. 6 einen Bodenteil in Draufsicht,

Fig. 7 einen Bodenteil in Unteransicht,

Fig. 8 einen Teilschnitt durch die Verbindungsstelle zweier Ringkörper mit Abstandsstükken, vergrößert,

Fig. 9 einen Teilschnitt eines Bodenteils vergrößert,

Fig.10 einen Schnitt nach der Linie X-X der Fig. 3, vergrößert,

Fig.11 eine Schublade im Schnitt, vergrößert,

Fig.12 ein Teilstück eines Ringkörpers in Draufsicht und

Fig.13 einen Teilschnitt zweier Ringkörper. vergrößert.

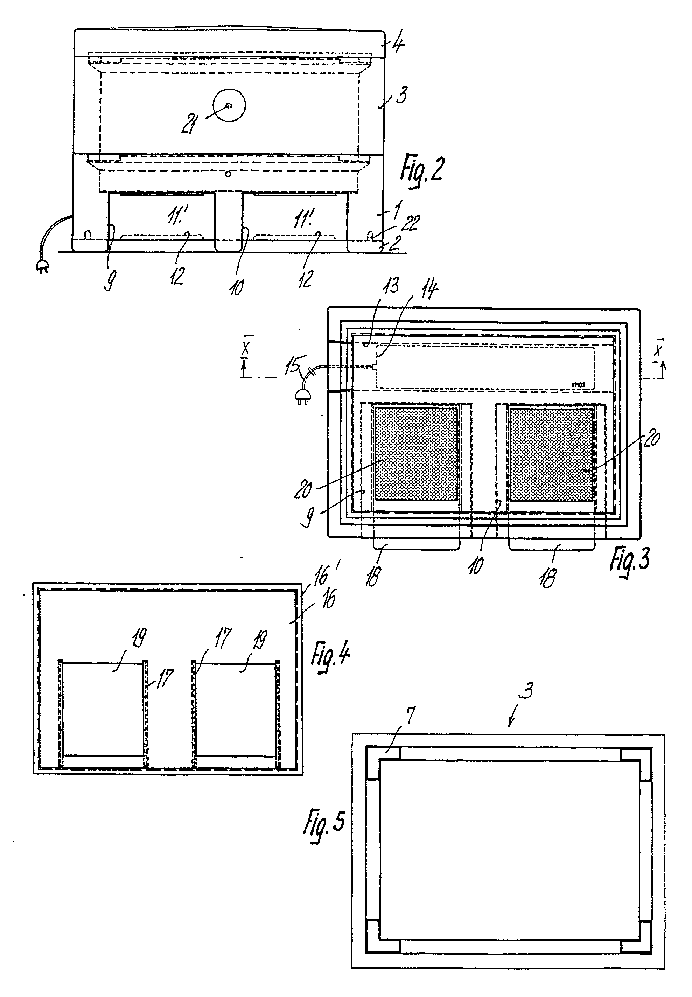

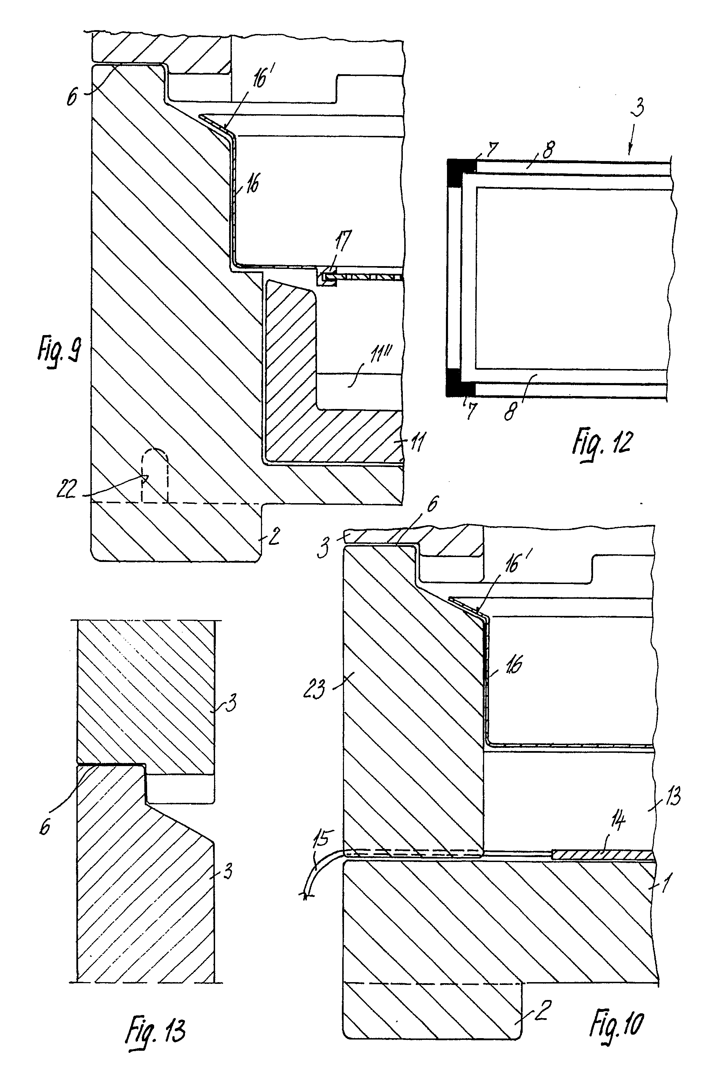

In den Fig. ist mit 1 ein Bodenteil bezeichnet, der mittels Fußstützen 2 aufstellbar ist. Auf dem Bodenteil 1 sind übereinander eine Anzahl Ringkörper 3 aufstellbar, und der dem Bodenteil 1 abgewandte Ringkörper 3 durch einen Deckelteil 4 übergriffen . Der Bodenteil 1 und die Ringkörper 3 bilden gemeinsam einen in der Höhe veränderlichen schachtförmigen Aufnahmebehälter 5 für verrottbare Materialien. Zur radialen Ausrichtung von Bodenteil 1 und Ringkörper 3 bzw. Deckelteil 4 weisen die jeweils gemeinsamen Trennungsflächen (Fig.13) Falze 6 auf. Die Ringkörper 3 bzw. der Bodenteil 1 sind in den Falzbereichen entweder unmittelbar aufeinander aufstellbar bzw. durch Abstandsstücke 7 zur Bildung von Luftführungsschlitzen 8 im Abstand voneinander gehalten. Die Abstandsstücke 7 sind bevorzugt in den Eckbe rei chen (Fig. 12) in die Falze 6 eingestellt. Im Bodenteil 1 sind frontseitig zwei offene Aussparungen 9 und 10 parallel nebeneinander vorgesehen, die sich in Richtung der Rückseite 1′ über eine Teiltiefe des Bodenteils 1 erstrecken und der Aufnahme von Schubladen 11 dienen. Die Schubladen 11 sind dabei in den Aussparungen 9, 10 frei verschiebbar untergebracht und zweckmäßig (Fig.11) mit einem an einer aufrechten Vorderwand 11' schräg nach rückwärts oben sich erstreckenden Bodenteil 11" versehen. Eine Griffmulde 19 in der Vorderwand 11' erleichtert die Handhabung der Schubladen 11. Im Abstand hinter den beiden Aussparungen 9, 10 ist, wie die Fig. 6 und 7 erkennen lassen, eine weitere Aussparung 13 quer im Bodenteil 1 vorgesehen, die der Unterbringung eines Heizelements 14 (Fig. 10) dient. Das Heizelement 14 ist über ein Netzkabel 15 mit einer Stromquelle verbindbar. Der Bodenteil 1, die Ringkörper 3 sowie der Deckelteil 4 und die Schubladen 11 sind aus einem geschäumten Kunststoff, z.B. Polystyrol, gebildet.

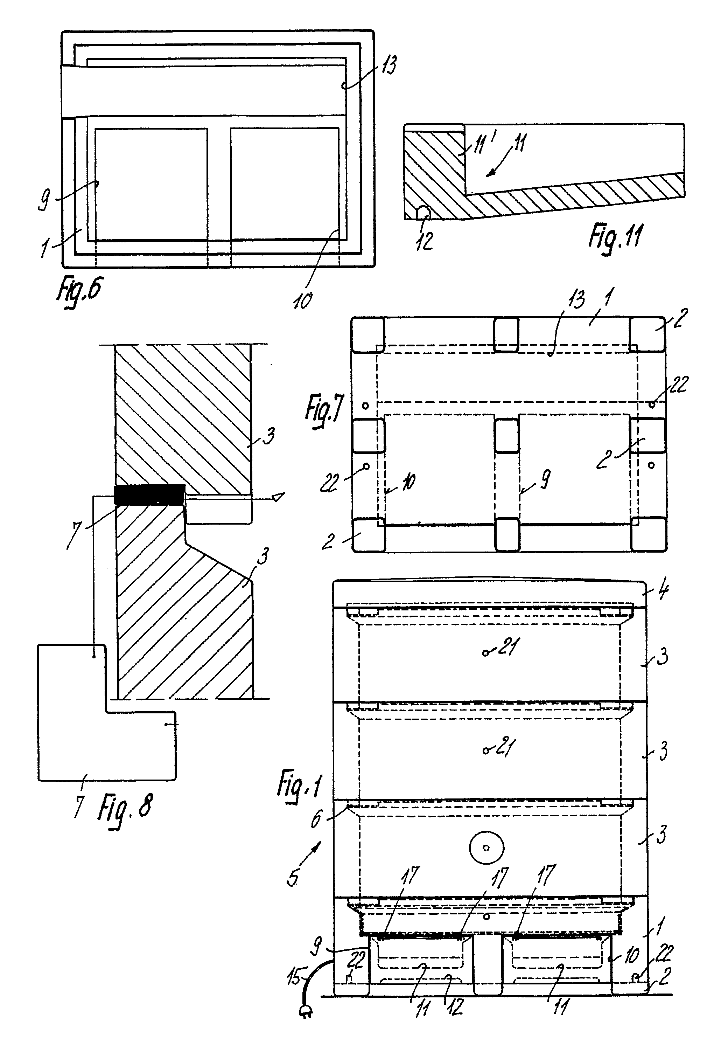

In dem Bodenteil 1 ist von oben her eine Wanne 16 (Fig. 3) aus einem Kunststoff größerer Festigkeit einhängbar, die sich mit einem Kragen 16' auf den Bodenteil 1 abstützt, die die das Heizelement 14 aufnehmende Aussparung 13 dicht übergreift und in den Bereichen oberhalb der Schubladen 11 in Führungen 17 gelochte Plattenteile 18 aufnimmt, die nach vorne aus dem Bodenteil 1 frei verschieblich ausziehbar sind. Die Plattenteile 18 dienen als Verschlußglieder für in der Wanne 16 ausgebildete Durchlässe 19 (Fig. 4), die einen Übertritt von Humus an die Schubladen 11 bei herausgezogenen Plattenteilen 18 erlauben. Außerdem können über die Durchlässe 19 und den Lochungen 20 der Plattenteile 18 in den Schubladen 11 zuvor als Startbeschickung eingebrachte Regenwürmer in den Aufnahmebehälter 5 gelangen. Die Ringkörper 3 und gegebenenfalls der Bodenteil 1 sind mit vorbereiteten Öffnungen 21 zum Einbringen von Temperaturmeßeinrichtungen (nicht gezeigt) versehen, wodurch die Verrottungstemperaturen in den verschiedenen Höhen des Aufnahmebehälters 5 kontrollierbar sind. Die Unterseite des Bodenteils 1 weist Ausnehmungen 22 zum Einhängen von Tragegriffen (nicht gezeigt) auf, die den Transport der Vorrichtung erleichtern. Während bei den Ausführungsbeispielen der Fig. 1 und 2 der Deckelteil über die ganze Ausdehnung geschlossen ist, kann auch ein Deckelteil mit einer Einfüllöffnung Anwendung finden, über die ein Häcksler (nicht gezeigt) für die Materialien stellbar ist. Es versteht sich, daß die Anordnung eines Häckslers auch nach Abnahme des Deckelteils 4 auf den obersten Ringkörper 3 erfolgen kann.

Zur Herstellung von Humus ist nach Abnahme des Deckelteils 4 der Aufnahmebehälter 5 zunächst mit verrottbaren Materialien aufzufüllen. Hierbei hindert die Wanne 16 ungewolltes Übertreten von Materialien in die das Heizelement 14 aufnehmende Ausnehmung 13 und in die mit Schubladen 11 ausgerüsteten Aussparungen 9, 10. Die Lochungen 20 der Plattenteile 18 sind dabei in der lichten Größe so bemessen, daß ein Durchfallen von Materialien in Richtung der Schubladen 11 nicht erfolgt. Die Schubladen 11 befinden sich in ihrer inneren Endstellung. Durch mehr oder weniger Herausziehen der Schubladen 11 kann über die Lochungen 20 eine Belüftung des Innenraums des Aufnahmebehälters 5 bewirkt werden. Gleichzeitig besteht die Möglichkeit, eine Lüftung über die durch die Abstandsstücke 7 gebildeten Luftführungsschlitze 8 in den Bereichen der Trennungsebenen der Ringkörper 3 bzw. des Bodenteils 1 vorzunehmen.

Nach dem Nachlassen der sich bei der Verrottung anfänglich einstellenden höheren Verrottungstemperaturen können die Schubladen 11 mit Wurmbrut bzw. Regenwürmern gefüllt werden, die über die Lochungen 20 der Plattenteile 18 zur Unterstützung und Beschleunigung einer Humusbildung in die verrottbaren Materialien eindringen und nach oben wandern. In den Materialien findet gleichzeitig eine Vermehrung der Regenwürmer statt. Die Verwendung von isolierenden Werkstoffen für den Bodenteil 1 und den Ringkörpern 3 bzw. den Deckelteil 4 sowie den Schubladen 11 sorgt für die Beibehaltung einer für die Tätigkeit der Regenwürmer und der Verrottung ausreichenden Wärme im Aufnahmebehälter 5, sodaß unterstützt durch das Wärmeelement 14 auch bei kühleren Jahreszeiten die Erzeugung von Humus und die Zucht von Regenwürmern, selbst im Freien möglich ist.

Nach Beendigung der Herstellung von Humus kann durch vorzugsweise teilweise Herausziehen der Plattenteile 18 Humus über die Durchlässe 19 in die Schubladen 11 einfallen und vermittels der Schubladen 11 entnommen werden. Die Regenwürmer befinden sich zu diesem Zeitpunkt in den oberen Bereichen des Aufnahmebehälters 5, wo sie ihre humusbildende Tätigkeit weiter ausüben. Durch Einschieben der Plattenteile 18 ist der Aufnahmebehälter 5 an seinem unteren Ende wieder verschließbar und das unbehinderte Einbringen der Schubladen 11 in die Aussparungen 9, 10 möglich. Nachfolgend kann der Aufnahmebehälter 5 vom oberen Ende her mit verrottbaren Materialien nachgefüllt werden.

Es versteht sich, daß die Aussparung 13 für die Aufnahme des Heizelements 14 zur Vermeidung von Wärmeverlusten an ihrem für die Einführung des Heizelements 14 vorgesehenen Öffnungsende durch einen Einsatzkörper 23 aus einem aufgeschäumten Kunststoff verschließbar ist.

## Ansprüche

1. Vorrichtung zum Herstellen von Humus aus verrottbaren Materialien mit einem eine obere Einfüllöffnung aufweisenden schachtartigen Aufnahmebehälter für die Materialien, bei der der Aufnahmebehälter durch einen Bodenteil und auf diesem und übereinander aufstellbaren Ringkörpern und einem die Einfüllöffnung des Aufnahmebehälters übergreifenden Deckelteil gebildet ist, dadurch gekennzeichnet, daß der Bodenteil (1) mindestens eine, sich über eine Teiltiefe des Bodenteils von der Vorderseite in Richtung Rückseite erstreckende, vorne offene Aussparung (9 bzw. 10) für die Aufnahme einer Schublade (11) und dahinter eine sich quer zur Aussparung erstreckende, in einer Seitenwand offene Aussparung (13) für die Aufnahme eines Heizelements (14) aufweist und daß der Bodenteil (1) innen oberhalb der Aussparung (9, bzw. 10, 13) eine von oben her in den Bodenteil (1) einhängbare Wanne (16) trägt, die die das Heizelement (14) aufnehmende Aussparung (13) dicht und vermittels in Führungen (17) nach vorne ausziehbarem gelochten Plattenteil (18) die die Schublade aufnehmende Aussparung (9 bzw. 10) freigebbar übergreift.

2. Vorrichtung nach Anspruch 1, dadurch gekennzeichnet, daß der Bodenteil (1) nebeneinander zwei, sich über eine Teiltiefe des Bodenteils in Richtung Rückseite erstreckende, vorne offene Aussparungen (9 und 10) für die Aufnahme von Schubladen (11) aufweist und daß die beiden Aussparungen (9, 10) durch in Führungen (17)der Wanne (16) verschieblich geführten gelochten Plattenteilen (18) oben übergriffen sind.

3. Vorrichtung nach Anspruch 1, dadurch gekennzeichnet, daß der Bodenteil (1) und Deckelteil (4), der Einsatzkörper (23) und die Ringkörper (3) sowie die Schubladen (11) aus einem aufgeschäumten Kunststoff gebildet sind.

4. Vorrichtung nach Anspruch 1 und 2, dadurch gekennzeichnet, daß die Schubladen (11) an einer ebenen aufrechten Vorderwand (11′) in Schieberichtung zu beiden Seiten im Abstand sich erstreckende Seitenwände und einen schräg nach hinten oben sich erstreckenden Boden (11″) aufweisen.

5. Vorrichtung nach Anspruch 1, dadurch gekennzeichnet, daß die Wanne (16) mit einem nach außen ausgestellten Kragen (16′) auf einer am Bodenteil (1) ausgebildeten Absetzung abstützbar ist und daß die Wanne (16) in der Stützstellung durch an dem Bodenteil (1) benachbartem Ringkörper (3) angeformten axialen Ansätzen fixierbar ist.

6. Vorrichtung nach Anspruch 1, dadurch gekennzeichnet, daß die Einbringöffnung der das Heizelement (14) aufnehmenden Aussparung (13) durch einen in die Einbringöffnung im Bodenteil (1) einschiebbaren Einsatzkörper (23) verschließbar ist.

7. Vorrichtung nach Anspruch 1, dadurch gekennzeichnet, daß der Bodenteil (1) an der Unterseite als Stützfüße (2) dienende Ansätze aufweist.

8. Vorrichtung nach Anspruch 1 und 2, dadurch gekennzeichnet, daß der Boden- (1) und Deckelteil (4) sowie die Ringkörper (3) in den einander benachbarten gemeinsamen Trennungsflächen korrespondierende Nuten und Fe dern aufweisen und daß die Nuten und Federn den Boden-und Deckelteil sowie die Ringkörper in der aufrechten Längsachse ausrichten und zueinander fixieren.

9. Vorrichtung nach Anspruch 1 und 2, dadurch gekennzeichnet, daß der Boden- (1) und Deckelteil (4) sowie die Ringkörper (3) in den einander zugeordneten Trennungsflächen miteinander korrespondierende Falze (6) aufweisen und daß die Falze (6) den Boden- (1) und Deckelteil (4) sowie die Ringkörper (3) in der aufrechten Längsachse zueinander ausrichten und fixieren.

10. Vorrichtung nach Anspruch 8 und 9, dadurch gekennzeichnet, daß die in den Trennungsflächen ausgebildeten Nuten und Federn bzw. Falze (6) umlaufend ausgebildet sind.

11. Vorrichtung nach Anspruch 10, dadurch gekennzeichnet, daß in den gemeinsamen Trennungsflächen von Bodenteil (1), Ringkörpern (3) sowie Ringkörpern (3) und Deckelteil (4) abschnittsweise Abstandsstücke (7) angeordnet sind und daß die Bereiche (8) zwischen den Abstandsstücken (7) Zuluftöffnungen für Außenluft bilden.

12. Vorrichtung nach Anspruch 11 , dadurch gekennzeichnet, daß die Abtandsstücke (7) in den Eckbereichen der gemeinsamen Trennungsflächen von Bodenteil (1) und Ringkörpern (3) sowie Ringkörpern (3) und Deckelteil (4) angeordnet sind.

13. Vorrichtung nach Anspruch 1, dadurch gekennzeichnet, daß die Schubladen (11) der Aufnahme einer Vielzahl als Startbeschickung wirkenden Regenwürmern dienen und daß die Lochungen (20) der sich oberhalb der Schubladen (11) erstreckenden Plattenteile (18) Durchlässe für die Regenwürmer bilden.

14. Vorrichtung nach Anspruch 1, dadurch gekennzeichnet, daß der Bodenteil (1) und/oder die Ringkörper (3) in den Umfangsflächen Durchführungsöffnungen (21) für Temperaturmeßeinrichtungen aufweisen.

15. Vorrichtung nach Anspruch 1, dadurch gekennzeichnet, daß der Deckelteil (4) im Bereich einer Öffnung einen mit einer Schneid- und/oder Schlageinrichtung versehenen Häcksler für die verrottbaren Materialien aufweist.

16. Vorrichtung nach Anspruch I, dadurch gekennzeichnet, daß im Bodenteil (1) zwischen den Stützfüßen (2) Einhängeöffnungen (22) für Tragegriffe bzw. als Griffmulden dienende Aussparungen ausgebildet sind.

17. Vorrichtung nach Anspruch 1, dadurch gekennzeichnet, daß der Bodenteil (1) und/oder der Deckelteil (4) und/oder die Ringkörper (3) innen mit einem Folienwerkstoff kaschiert sind.

18. Vorrichtung nach Anspruch 1, dadurch gekennzeichnet, daß der Bodenteil (1), die Ringkörper (3) und der Deckelteil (4) außen eine Wetterschutzauflage fest tragen.

19. Vorrichtung nach Anspruch 1, dadurch gekennzeichnet, daß die Ringkörper (3) in der Be-grenzungsfläche zum Innenraum des Aufnahmebe-hälters (5) offene und in Längsrichtung desselben sich erstreckende Luftführungskanäle aufweisen.

Fig.6

Fig.11

Fig.7

Fig.8

Fig.1

**Fig.2**

21 · 4 · 3 · 11'. · 11'. · 1 · 22 · 2 · 9 · 12 · 10 · 12

**Fig.3**

13 · 14 · X · X · 15 · 20 · 20 · 9 · 18 · 10 · 18

**Fig.4**

16' · 16 · 19 · 17 · 19 · 17

**Fig.5**

7 · 3

EP 0 393 212 A1

Fig. 9

Fig. 12

Fig. 13

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 716 845 (P. REUSS et al.) <br> * Ansprüche * <br><br> --- | 1,3,7,8 ,10-12, 14-19 | C 05 F 17/02 |
| A | US-A-3 961 603 (R.E. GADDIE, Sr.) <br> * Figuren 1-3 * <br> ----- | 1 | |

RECHERCHIERTE SACHGEBIETE (Int. Cl.5)

A 01 K
C 05 F

Der vorliegende Recherchenbericht wurde für alle Patentansprüche erstellt

| Recherchenort | Abschlußdatum der Recherche | Prüfer |
|---|---|---|
| DEN HAAG | 19-12-1989 | SCHUT, R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes Dokument

EPO FORM 1503 03.82 (P0403)